# EUROPÄISCHE PATENTANMELDUNG

(11) **EP 4 671 086 A1**
(43) Veröffentlichungstag der Anmeldung: **31.12.2025**
(21) Anmeldenummer: 24185122.9
(22) Anmeldetag: 27.06.2024
(51) Int. Cl.: B61L 27/53, B61L 27/57, B61L 27/60, G06Q 10/20

(54) **VERFAHREN ZUR PLANUNG VON WARTUNGSMASSNAHMEN FÜR EIN BAHNTECHNISCHES SYSTEM**

(71) Anmelder: Siemens Mobility GmbH, 80997 München (DE)
(72) Erfinder: Gehrke, Thomas, 38102 Braunschweig (DE)
(74) Vertreter: Siemens Patent Attorneys

(57) **Zusammenfassung**

Verfahren zur Planung von Wartungsmaßnahmen für ein bahntechnisches System

Die Erfindung umfasst ein Verfahren zur Planung von Wartungsmaßnahmen für ein bahntechnisches System (BTS), aufweisend eine Funktionskomponente (FK), die eine zum Bahnbetrieb gehörende Funktion ausführt, eine Überwachungsvorrichtung (UV), die die Funktion der Funktionskomponente (FK) überwacht und diese Funktion beschreibende Überwachungsdaten (UD) erzeugt, eine Diagnoseeinrichtung (DGN), welche von der Überwachungsvorrichtung (UV) erstellte, die Überwachungsdaten (UD) enthaltende Nachrichten empfängt und rechnergestützt Diagnosedaten (DD), die einen Bedarf für Wartungsmaßnahmen beschreiben, erzeugt. Ein rechnergestütztes Planungsmodul (PLM) kommt zum Einsatz, welches ein Large Language Model (LLM) verwendet, um die Diagnosedaten (DD) enthaltende Nachrichten auszuwerten und Analysedaten (AD), die die Diagnosedaten (DD) in einer menschlichen Sprache beschreiben, zu erzeugen, und um die Analysedaten (AD) auszuwerten. Das Auswerten erfolgt in Bezug auf einen Wartungsbedarf und/oder Wartungsmaßnahmen. Eine Beschreibung des Wartungsbedarfs und/oder Wartungsmaßnahmen wird in menschlicher Sprache erzeugt. Die Beschreibung des Wartungsbedarfs und/oder der Wartungsmaßnahmen repräsentierende Ausgabedaten (OD) werden über eine erste Schnittstelle (S1) ausgegeben. Ferner umfasst die Erfindung ein bahntechnisches System, ein Computerprogrammprodukt und ein computerlesbares Speichermedium. Der Vorteil liegt darin, dass verschiedenartige, das bahntechnische System beschreibende Unterlagen automatisiert ausgewertet werden können.

## Beschreibung

### Technisches Gebiet

Von der Erfindung ist ein Verfahren zur Planung von Wartungsmaßnahmen umfasst. Ferner ist von der Erfindung ein bahntechnisches System mit einem rechnergestützten Werkzeug zur Wartungsplanung umfasst. Ferner ist von der Erfindung ein Computerprogrammprodukt, enthaltend Programmbefehle, umfasst. Ferner ist von der Erfindung ein Computerlesbares Speichermedium, enthaltend Daten, umfasst.

### Technischer Hintergrund

Während Bahnbetreiber bisher von Diagnosesystemen nur die Meldung von Störungen erhalten, werden immer mehr Anforderungen an eine Entscheidungsunterstützung gestellt. Neben der Meldung einer Störung soll auch der Weg aufgezeigt werden, wie eine gemeldete Störung möglichst effizient behoben werden kann.

Allerdings ist der Aufwand, der mit einer zumindest teilweisen Automatisierung einer Steuerung der Wartungsprozesse einhergeht, beträchtlich. Dokumentationen, die nur in Textform vorliegen, müssen in geeigneter Weise inhaltlich derart erfasst bzw. aufbereitet werden, dass die für eine Automatisierung notwendigen Informationen für ein Computerprogramm zugreifbar zur Verfügung stehen. Dabei müssen auch Inkonsistenzen aufgelöst werden, die hauptsächlich historisch bedingt sind, weil Bahnanlagen über Jahrzehnte betrieben und währenddessen immer wieder modifiziert werden. Dies lässt den mit einer Automatisierung verbundenen Aufwand schnell über den erwarteten Nutzen steigen, sodass allein aus wirtschaftlichen Gründen eine Automatisierung unterbleibt.

### Zusammenfassung der Erfindung

Die Aufgabe der Erfindung besteht darin, die beschriebenen Probleme im Stand der Technik zu beheben. Insbesondere ist es Aufgabe, dass ein Verfahren zur Planung von Wartungsmaßnahmen derart weitergebildet wird, dass dieses zumindest teilautomatisiert, vorzugsweise automatisiert ablaufen kann, wobei sich dieses auch in bestehende bahntechnische Systeme, die bislang keine automatisierte Planung von Wartungsmaßnahmen enthalten haben, mit vertretbarem Aufwand implementieren lässt. Weiterhin ist es Aufgabe der Erfindung, ein Fahrzeug, ein Computerprogrammprodukt und ein computerlesbares Speichermedium anzugeben, mit dem das verbesserte Verfahren durchführbar ist.

Beschrieben wird gemäß einem ersten Aspekt der Erfindung ein Verfahren zur Planung von Wartungsmaßnahmen für ein bahntechnisches System (d. h. eine ortsfeste Bahnanlage oder ein Schienenfahrzeug oder eine Kombination aus beidem), aufweisend
a) eine Funktionskomponente, die eine zum Bahnbetrieb gehörende Funktion ausführt (beispielsweise eine Weiche oder ein anderes Streckenelement oder eine Fahrzeugkomponente wie eine Bremse),
b) eine Überwachungsvorrichtung (beispielsweise ein Sensor), die die Funktion der Funktionskomponente überwacht und diese Funktion beschreibende Überwachungsdaten (beispielsweise Messwerte) erzeugt,
c) eine Diagnoseeinrichtung, welche von der Überwachungsvorrichtung erstellte, die Überwachungsdaten enthaltende Nachrichten (beispielsweise ein Messprotokoll) empfängt und rechnergestützt Diagnosedaten, die einen Bedarf für Wartungsmaßnahmen beschreiben, erzeugt.

Als Wartungsmaßnahmen im Sinne der Erfindung sollen alle Arbeiten verstanden werden, die eine Funktionsfähigkeit des bahntechnischen Systems erhalten bzw. bei Verlust der Funktionsfähigkeit wiederherstellen. Darunter zählen auch die Reparatur bzw. der Austausch von Funktionskomponenten, welche Teil des bahntechnischen Systems sind. Unter Wartungsmaßnahmen sind jedoch keine Maßnahmen zu verstehen, welche eine Neukonzeption bzw. einen Neubau eines bahntechnischen Systems beinhalten.

Ein bahntechnisches System beinhaltet mindestens eine Funktionskomponente, typischerweise jedoch eine Vielzahl von Funktionskomponenten. Diese Funktionskomponenten können ortsfest sein (beispielsweise Stellwerke oder Stellelemente an einer Bahnstrecke) oder auch mobil (beispielsweise Fahrzeuge wie Lokomotiven oder Wagen). Die Funktionen, die die Funktionskomponenten übernehmen, tragen zum Bahnbetrieb bei. Ein Stellwerk organisiert den Zugverkehr durch Ansteuerung verschiedener Streckenelemente wie zum Beispiel Weichen, Fahrzeuge transportieren Menschen und Güter usw.

Eine Überwachungsvorrichtung übernimmt eine Überwachungsfunktion für das bahntechnische System. Hierbei kommt mindestens eine Sensorvorrichtung zum Einsatz, wobei der Sensor Messwerte erzeugt, welche sich als Überwachungsdaten weiterverarbeiten zu lassen. Daher beschreiben die Überwachungsdaten eine Funktion (eingeschlossen eine Fehlfunktion) des bahntechnischen Systems, welche sich aus den Messwerten ableiten lässt. Überwachungsdaten können durch eine Diagnoseeinrichtung ausgewertet werden. Die Diagnoseeinrichtung kann durch Berücksichtigung von Regeln aus den Überwachungsdaten Wartungsmaßnahmen ableiten, welche infolgedessen ausgeführt werden müssen und durch die Diagnosedaten beschrieben werden. Diese können durch die Diagnoseeinrichtung beispielsweise als Diagnosedaten enthaltenden Nachrichten ausgegeben werden.

Rechnergestützt oder computerimplementiert ist eine Vorrichtung, wenn diese eine Rechenumgebung aufweist, oder ein Verfahren, wenn eine Rechenumgebung mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Eine Cloud (auch als Rechnerwolke oder Datenwolke bezeichnet) ist eine Rechenumgebung für ein sog. Cloud-Computing. Gemeint ist eine IT-Infrastruktur, welche über Schnittstellen eines Netzwerks wie dem Internet verfügbar gemacht wird. Sie beinhaltet in der Regel Speicherplatz, Rechenleistung oder Software als Dienstleistung, ohne dass diese auf einer die Cloud nutzenden Recheninstanz installiert sein müssen. Die im Rahmen des Cloud-Computings angebotenen Dienstleistungen umfassen das gesamte Spektrum der Informationstechnik und beinhalten unter anderem die IT-Infrastruktur, Plattformen, Software und Rechenleistung, wobei der Cloud-Anbieter die angebotenen Ressourcen bedarfsgerecht an die Cloud-Nutzer verteilt, mit dem Ziel, die Ressourcen damit optimal auszuschöpfen.

Da in der Bahntechnik hohe Sicherheitsstandards hinsichtlich Funktion (Betriebssicherheit, Safety) sowie Angreifbarkeit (Übertragungssicherheit, Security) computerimplementierter Lösungen gelten, sind die Funktionalitäten einer Cloud, die in der Bahntechnik zum Einsatz kommt, hinsichtlich ihrer geteilten Verfügbarkeit üblicherweise begrenzt. Insbesondere, was den Zugriff eines potenziell unbegrenzten Kreises von Cloud-Nutzern angeht, sind daher Restriktionen erforderlich. Aber auch, was die Teilung von Rechenressourcen durch verschiedene Recheninstanzen angeht, muss mit Blick auf eine erforderliche Redundanz ein Zugriff begrenzt werden. Eine Technologie, die diese Restriktionen für die Bahntechnik berücksichtigt, wird im Zusammenhang mit dieser Erfindung auch als private Cloud bezeichnet, auch wenn eine private Cloud die mit Cloudtechnologie verbundenen technischen Merkmale nur eingeschränkt erfüllt.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme. Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können auf computerlesbaren Speichern in Form von Arbeitsspeichern (engl. Random-Access Memory, RAM) oder Datenspeichern (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein und dienen einem Austausch von Daten vorzugsweise in Form von digitalen Datensätzen oder analogen Signalen.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Erfindungsgemäß ist vorgesehen, dass ein rechnergestütztes Planungsmodul zum Einsatz kommt, welches ein Large Language Model verwendet, um
d) die Diagnosedaten enthaltende Nachrichten auszuwerten,
e) Analysedaten (beispielsweise Dokumentationsunterlagen in Textform), die die Funktionskomponente in einer menschlichen Sprache beschreiben, auszuwerten, wobei das Auswerten in Bezug auf einen Wartungsbedarf und/oder Wartungsmaßnahmen erfolgt,
f) eine Beschreibung des Wartungsbedarfs und/oder Wartungsmaßnahmen in menschlicher Sprache (vorzugsweise in Textform oder in Form von mit Texterklärungen erläuterten Bildern) zu erzeugen,
g) die Beschreibung des Wartungsbedarfs und/oder der Wartungsmaßnahmen repräsentierende Ausgabedaten (beispielsweise eine Textausgabe akustisch oder in Bildform) über eine erste Schnittstelle auszugeben.

Die in dieser Erfindungsbeschreibung verwendete Begriffe haben die folgende Bedeutung.

Ist im Rahmen dieser Erfindungsbeschreibung von menschlicher Sprache die Rede, sind Sprachen gemeint, die der Kommunikation von Menschen dienen. Diese Sprachen werden im engeren Sinne auch als natürliche Sprachen bezeichnet, wenn diese durch den Spracherwerb im Kindesalter erlernt werden. Large Language Models (im Folgenden auch kurz als LLM bezeichnet) bezeichnen Sprachmodelle, die aufgrund eines Trainings mit einer großen Vielzahl von Sprachproben aus Spracheingaben Ausgaben, vorzugsweise Sprachausgaben (aber auch Bildausgaben), generieren können, die in dem Kontext der Spracheingabe voraussichtlich inhaltlich sinnvoll sind. Ein Beispiel hierfür ist das LLM ChatGPT.

Ist im Rahmen dieser Erfindungsbeschreibung von Analysedaten die Rede, so sind Daten gemeint, welche in menschlicher Sprache Aspekte beschreiben, die für die Wartungsmaßnahmen relevant sind. Diese Daten werden Analysedaten genannt, weil sie zum Zwecke der Arbeit des LLM analysiert, also ausgewertet werden. Das Ergebnis dieses Auswertens wird verwendet, um einen Wartungsbedarf und/oder Wartungsmaßnahmen sowie, wie im Folgenden noch näher erläutert, fakultativ auch Materialverfügbarkeit und/oder Beschaffungsmaßnahmen für dieses und Personalverfügbarkeit und/oder eine Personalplanung daraus abzuleiten.

Das Auswerten in Bezug auf einen Wartungsbedarf und/oder Wartungsmaßnahmen erfolgt dadurch, dass ein entsprechender Auftrag in menschlicher Sprache an das Sprachmodell gestellt wird. Dies erfolgt in an sich bekannter Weise durch einen sogenannten Prompt, eine Eingabe, die das LLM mit der Auswertung beauftragt, beispielsweise: "Ermittelte einen Wartungsbedarf für die Funktionskomponente X und beschreibe daraus folgende Wartungsmaßnahmen." Der Vorteil einer Verwendung eines LLM liegt dabei darin, dass auch dann, wenn das bahntechnische System erstmalig durch das erfindungsgemäße Verfahren unterstützt werden soll, gleich ein Ergebnis durch das LLM erzielt wird. Das LLM nutzt das Sprachmodell dahingehend, die bei der Datenlage wahrscheinlichste Antwort zu erzeugen, und gibt diese als Beschreibung des Wartungsbedarfs in menschlicher Sprache aus. Je weiter die Datenbasis im Verlauf der Verwendung des erfindungsgemäßen Verfahrens ausgebaut wird, desto sicherer werden dabei die Aussagen (hierzu im Folgenden noch mehr).

Dabei ist zu berücksichtigen, dass das LLM eine statistisch wahrscheinliche Antwort auf die durch den Prompt definierte Aufgabe formuliert. Diese Antwort ist somit sprachbasiert und nicht wissensbasiert und daher nur mit einer gewissen Wahrscheinlichkeit richtig. Die Ausgabe der Beschreibung eines vorgeschlagenen Wartungsbedarfs und/oder vorgeschlagener Wartungsmaßnahmen in menschlicher Sprache ermöglicht es aber dem Wartungspersonal, Wartungsbedarf und/oder Wartungsmaßnahmen zu überprüfen und deren Durchführung nur zu bestätigen, wenn das Ergebnis der Überprüfung positiv ist.

Durch die Auswertung von Unterlagen, die die bahntechnische Anlage beschreiben, wird vorteilhaft die Ermittlung von Wartungsmaßnahmen bzw. eines Wartungsbedarfs derart unterstützt, dass die Wahrscheinlichkeit, dass die Ausgabe eines Wartungsbedarfs den tatsächlichen Gegebenheiten der bahntechnischen Anlage auch entspricht, erhöht. Dabei müssen die Unterlagen, die zur Beschreibung der bahntechnischen Anlage herangezogen werden, lediglich in Textform zur Verfügung stehen. Eine aufwändige Umsetzung dieser Unterlagen in ein durch ein Wartungsprogramm verwertbares Format ist daher vorteilhaft nicht notwendig. Mit anderen Worten schafft die Verwendung eines LLM erfindungsgemäß die Möglichkeit, ein Verfahren zur Planung von Wartungsmaßnahmen automatisiert zu unterstützen, ohne dass der Aufwand einer ersten Implementierung bei bestehenden bahntechnischen Anlagen zu hoch ist, um eine wirtschaftliche Umsetzung zu gewährleisten.

Die Ausgabe der ermittelten Wartungsmaßnahmen in menschlicher Sprache ermöglicht es andererseits, dass eine Überprüfung durch menschliches Wartungspersonal, welches vor Einführung des erfindungsgemäßen Verfahrens zur Planung von Wartungsmaßnahmen bei einer bestehenden bahntechnischen Anlage bereits mit dieser Aufgabe betraut war, stattfinden kann. Hierdurch wird sichergestellt, dass ein fehlerhafter Vorschlag seitens des LLM in geeigneter Weise korrigiert werden kann. Auch wenn diese Überprüfung insbesondere kurz nach Einführung des erfindungsgemäßen Verfahrens noch erforderlich ist, wird dennoch Aufwand bei der Ermittlung der Maßnahmen gespart, der bei einer rein manuellen Ermittlung ohne Unterstützung durch das LLM anfallen würde. Das Verhältnis zwischen Aufwand und Nutzen verbessert sich bei einer fortgesetzten Anwendung sogar noch (hierzu im Folgenden noch mehr).

Beschrieben wird gemäß einem weiteren Aspekt der Erfindung ein bahntechnisches System mit einem rechnergestützten Werkzeug zur Wartungsplanung, aufweisend
n) eine Funktionskomponente, die eingerichtet ist, eine zum Bahnbetrieb gehörende Funktion auszuführen,
o) eine Überwachungsvorrichtung, die eingerichtet ist, die Funktion der Funktionskomponente zu überwachen und diese Funktion beschreibende Überwachungsdaten zu erzeugen,
p) eine Diagnoseeinrichtung, welche eingerichtet ist, von der Überwachungsvorrichtung erstellte, die Überwachungsdaten enthaltende Nachrichten zu empfangen und rechnergestützt einen Bedarf für Wartungsmaßnahmen beschreibende Diagnosedaten zu erzeugen.

Gemäß diesem Aspekt ist erfindungsgemäß vorgesehen, dass das Werkzeug zur Wartungsplanung ein Planungsmodul enthält, welches eingerichtet ist, unter Einsatz eines Large Language Models die o. g. Schritte d) bis g) durchzuführen. Die mit diesem Aspekt der Erfindung verbundenen Vorteile sind vorstehend bereits erläutert worden, wobei auf diese Vorteile verwiesen wird.

Beschrieben wird gemäß einem weiteren Aspekt der Erfindung ein Computerprogrammprodukt, enthaltend Programmbefehle, die durch eine Rechenumgebung ausführbar sind. Gemäß diesem Aspekt ist erfindungsgemäß vorgesehen, dass zumindest die Schritte d) bis g) des Verfahrens, wie oben beschrieben, ausgeführt wird.

Gemäß der Erfindung wird somit ein Programmmodule enthaltendes Computerprogrammprodukt mit Programmbefehlen beschrieben, wobei die Programmmodule in derselben Recheninstanz oder mehreren Recheninstanzen der Rechenumgebung laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Beschrieben wird gemäß einem weiteren Aspekt der Erfindung ein computerlesbares Speichermedium, enthaltend Daten, welche als Datensätze vom Speichermedium gespeichert werden. Gemäß diesem Aspekt ist erfindungsgemäß vorgesehen, dass die Datensätze das vorstehend beschriebene Computerprogrammprodukt ausführbar machen.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogrammproduktes. Das Computerprogrammprodukt wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

### Ausgestaltungen der Erfindung

Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass das rechnergestützte Planungsmodul auch zum Einsatz kommt, um
h) eine Verfügbarkeit von Wartungsmaterial in einer menschlichen Sprache beschreibende Analysedaten auszuwerten, wobei das Auswerten in Bezug auf
eine Materialverfügbarkeit und/oder Beschaffungsmaßnahmen für das Wartungsmaterial erfolgt,
i) eine Beschreibung der Materialverfügbarkeit und/oder Beschaffungsmaßnahmen in menschlicher Sprache zu erzeugen,
j) die Beschreibung der Materialverfügbarkeit und/oder Beschaffungsmaßnahmen repräsentierende Ausgabedaten über die erste Schnittstelle auszugeben.

Als Wartungsmaterial werden einerseits Verbrauchsmaterial wie beispielsweise Schmieröl und andererseits Ersatzteile, die im Rahmen der Wartung ausgewechselt werden müssen, verstanden. Unter dem Begriff der Wartung wird demgemäß sowohl eine Instandhaltung zur Erhaltung der Funktion von Funktionskomponenten als auch die Reparatur im Falle des Versagens von Bauteilen der Funktionskomponenten bzw. der gesamten Funktionskomponenten verstanden. Unterlagen, die das LLM auswerten kann, um einen Einfluss der Lagerhaltung zu berücksichtigen, können beispielsweise Inventarlisten sein, die einen Lagerbestand an Wartungsmaterial in menschlicher Sprache beschreiben.

Ein Vorteil dieser Variante besteht darin, dass die automatische Erstellung eines Wartungsplans auch von dem Aspekt der Verfügbarkeit von Wartungsmaterial beispielsweise als Lagerbestand abhängig gemacht werden kann. Mit anderen Worten wird dann auch dieser Aspekt bei der Planung der Wartung berücksichtigt. Beispielsweise kann die Anforderung erstellt werden, Material zu bestellen oder auf anderem Wege verfügbar zu machen, welches erst eintreffen muss, bevor die Wartungsmaßnahmen selbst durchgeführt werden können. Die mit der automatischen Erstellung dieses Wartungsplans verbundenen Vorteile sind oben bereits beschrieben worden.

Gemäß einer Variante sind die oben erklärten Aspekte der Erfindung dadurch bestimmt, dass das rechnergestütztes Planungsmodul auch zum Einsatz kommt, um
k) eine Verfügbarkeit von Wartungspersonal in einer menschlichen Sprache beschreibende Analysedaten auszuwerten, wobei das Auswerten in Bezug auf eine Personalverfügbarkeit und/oder Personalplanung erfolgt,
l) eine Beschreibung der Personalverfügbarkeit und/oder Personalplanung in menschlicher Sprache zu erzeugen,
m) die Beschreibung der Personalverfügbarkeit und/oder Personalplanung repräsentierende Ausgabedaten über die erste Schnittstelle auszugeben.

Als Wartungspersonal werden Personen verstanden, die für die geplanten Wartungsmaßnahmen eingesetzt werden müssen. Die Wartungsmaßnahmen werden normalerweise nicht vollautomatisch erfolgen können, weswegen die Kapazitätsplanung auch das Wartungspersonal beinhalten muss. Unterlagen, die das LLM auswerten kann, um die Verfügbarkeit von Wartungspersonal zu berücksichtigen, können beispielsweise Terminkalender der mit der Wartung betrauten Personen, aber auch deren Urlaubsplanung oder auch ein dokumentierter Krankenstand des Personals sein.

Ein Vorteil dieser Variante besteht darin, dass die automatische Erstellung eines Wartungsplans auch den Aspekt der Verfügbarkeit von Wartungspersonal berücksichtigen kann. Beispielsweise kann eine Anforderung für eine Wartung so terminiert werden, dass das mit der Wartung betraute Personal verfügbar ist.

Gemäß einer Variante sind die oben erklärten Aspekte der Erfindung dadurch bestimmt, dass die Analysedaten in einem Datenpool gesammelt gespeichert werden.

Damit, dass die Analysedaten gesammelt gespeichert werden, ist gemeint, dass die Analysendaten mehrerer Wartungsmaßnahmen und/oder Materialmaßnahmen und/oder Personalmaßnahmen auslösender Ereignisse in der Datenbank zusammengefasst werden. Ein Vorteil dieser Variante besteht darin, dass für das LLM eine für den Anwendungsfall spezifische Datenbank mit einer hohen Relevanz des Inhalts entsteht. Diese Daten können durch das LLM ausgewertet (trainiert) werden, um diese für den Rahmen der durch das erfindungsgemäße Verfahren zu bewältigenden Aufgaben zu optimieren. Das Sprachmodell, welches dem LLM zugrunde liegt, wird daher leistungsfähiger, was die Treffsicherheit vorgeschlagener Wartungsmaßnahmen, Materialmaßnahmen und Personalmaßnahmen betrifft.

Gemäß einer Variante sind die oben erklärten Aspekte der Erfindung dadurch bestimmt, dass eine Eingabeaufforderung ausgegeben wird, dass ein Mensch die Plausibilität und/oder Richtigkeit der Analysedaten bestätigen soll, und eine darauf gerichtete Eingabe ausgewertet wird.

Ein Vorteil dieser Variante besteht darin, dass eine Schnittstelle geschaffen wird, über die ein Mensch bei eventuell fehlerhaften Ergebnissen, die durch das LLM erzeugt wurden, verhindern kann, dass diese umgesetzt werden. Damit ist es leicht möglich, manuell in den Prozess einzugreifen. Wie bereits beschrieben wurde, kann dies insbesondere kurz nach Einführung des erfindungsgemäßen Verfahrens bei einer bahntechnischen Anlage erforderlich werden, da das Sprachmodell, welches dem Verfahren zugrunde liegt, noch nicht optimal auf die Aufgabe, das erfindungsgemäße Verfahren optimal zu unterstützen, vorbereitet ist.

Gemäß einer Variante sind die oben erklärten Aspekte der Erfindung dadurch bestimmt, dass die Eingabe den zugehörigen Analysedaten zugeordnet wird und zusammen mit den zugehörigen Analysedaten als Trainingsdatensätze in dem Datenpool abgespeichert wird.

Ein Vorteil dieser Variante besteht darin, dass eine Datenbasis geschaffen wird, die Trainingsdatensätze enthält, mit denen eine künstliche Intelligenz im Rahmen eines maschinellen Lernens optimiert werden kann. Wie im Folgenden noch näher beschrieben wird, kann hierdurch eine Optimierung des erfindungsgemäßen Verfahrens erfolgen, so dass mit fortschreitender Nutzungsdauer die Ergebnisse, die einen Vorschlag für Wartungsmaßnahmen enthalten, immer weiter verbessert werden können.

Gemäß einer Variante sind die oben erklärten Aspekte der Erfindung dadurch bestimmt, dass mit den Trainingsdatensätzen ein maschinelles Lernen für einen auf künstliche Intelligenz basierenden Wartungsalgorithmus durchgeführt wird.

Ein Wartungsalgorithmus basiert im Gegensatz zu einem LLM auf einem Wissensmodell, d. h., dass für die Durchführung des Wartungsalgorithmus bestimmte Eingangsparameter definiert sind, die auf deterministische Weise zu vorhersagbaren Ausgangsparametern führen. Insofern müssen (zumindest nach Abschluss eines maschinellen Lernens) Ergebnisse, die ein trainierter Wartungsalgorithmus liefert, nicht mehr durch einen Menschen kontrolliert werden, wenn dessen Eignung grundsätzlich validiert wurde. Die Gewichtung der Eingangsparameter zur Definition der Ausgangsparameter sind im Rahmen des Trainierens des Wartungsalgorithmus zu modifizieren, um eine geforderte Prozesssicherheit (Sicherheit gegen Versagen des Prozesses) zu erreichen. Dies soll an einem einfachen Beispiel erläutert werden.

Ist der Eingangsparameter beispielsweise der Füllstand eines Reservoirs für Schmiermittel, so kann durch ein Training ein Füllstand definiert werden, dessen Unterschreitung die Wartungsmaßnahme der Erforderlichkeit eines Nachfüllens auslöst. Dieser Füllstand muss derart definiert werden, dass das Schmiermittel nicht ausgeht, bevor die Wartungsmaßnahmen durchgeführt werden kann. Hierbei können Kriterien wie Materialverfügbarkeit und Personalverfügbarkeit eine Rolle spielen, weil eine sofortige Durchführung der Wartungsmaßnahme deswegen nicht immer möglich sein wird. Die Restverfügbarkeit des Schmiermittels muss durch Festlegung des Füllstandes daher unter üblichen Bedingungen ein rechtzeitiges Durchführen der Wartungsmaßnahmen (nachfüllen von Schmiermittel) möglich machen. Die Sicherheit des trainierten Prozesses liegt dabei nicht bei 100 %. Ziel ist es daher, ein Versagensrisiko unterhalb einer vorgegebenen Versagenswahrscheinlichkeit zu verringern. Sobald dies gelungen ist, kann ein diesbezügliches Training als abgeschlossen gelten.

Unter künstlicher Intelligenz (im Folgenden auch mit KI abgekürzt), auch Artificial Intelligence genannt, ist im Rahmen dieser Erfindung im engeren Sinne die Fähigkeit eines rechnergestützten maschinellen Lernens, auch Machine Learning genannt, (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt und erlernt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit spezifischeren Anwendungen, zum Beispiel Regression und Klassifikation, Strukturerkennung und -vorhersage, Datengenerierung (Sampling) oder autonomes Handeln.

Beim überwachten Lernen wird das System durch den Zusammenhang von Eingabe und zugehöriger Ausgabe bekannter Daten trainiert und erlernt auf diese Weise approximativ funktionale Zusammenhänge. Dabei kommt es auf die Verfügbarkeit geeigneter und ausreichender Daten an, denn wenn das System mit ungeeigneten (z.B. nicht-repräsentativen) Daten trainiert wird, so lernt es fehlerhafte funktionale Zusammenhänge. Beim unüberwachten Lernen wird das System ebenfalls mit Beispieldaten trainiert, jedoch nur mit Eingabedaten und ohne Zusammenhang zu einer bekannten Ausgabe. Es lernt, wie Datengruppen zu bilden und zu erweitern sind, was typisch für den betreffenden Anwendungsfall ist und wo Abweichungen bzw. Anomalien auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Gemäß einer Variante sind die oben erklärten Aspekte der Erfindung dadurch bestimmt, dass die o. g. Schritte d) und g), insbesondere auch Schritt j) und/oder Schritt m) parallel zum Large Language Model auch mit dem Wartungsalgorithmus durchgeführt werden.

Ein Vorzug dieser Variante besteht darin, dass die oben genannten Vorteile der Anwendung des LLM und die Vorteile der Anwendung des Wartungsalgorithmus gemeinsam genutzt werden können. Der Wartungsalgorithmus ermöglicht, sobald dieser trainiert wurde, die Definition von Wartungsmöglichkeiten mit einer vorteilhaft sehr geringen Fehlerwahrscheinlichkeit. Allerdings wird ein maschinelles Lernen beispielsweise bei Wartungsmaßnahmen, die sehr oft durchgeführt werden müssen, schneller zum erfolgreichen Anlernen des Wartungsalgorithmus führen als bei Wartungsmaßnahmen, die seltener durchgeführt werden müssen. Für die Letzteren kann dann parallel weiter das auf dem LLM beruhende Verfahren angewendet werden, ohne dass sich die beiden Verfahren einander stören.

Eine andere Anwendung besteht darin, dass sich die Vorgaben des Eisenbahnsystems ändern können, beispielsweise durch Umbau oder Alterung / Verschleiß. Daher ist es möglich, dass ein einmal angelernter Wartungsalgorithmus mit der Zeit größere Fehlerquoten bei der Vorgabe von Wartungsmaßnahmen erzielt. Hier kann es erforderlich sein, den Wartungsalgorithmus mithilfe des auf dem LLM basierenden Verfahrens zu modifizieren. Läuft der auf dem LLM basierende Ansatz parallel mit dem Wartungsalgorithmus, kann zum Beispiel die Fehlerquote beider Verfahrensweisen verglichen werden und ein erneutes Training des Wartungsalgorithmus angestoßen werden, wenn dieser über einen längeren Zeitraum eine höhere Fehlerquote erzielt als die auf dem LLM basierende Vorgehensweise.

Gemäß einer Variante sind die oben erklärten Aspekte der Erfindung dadurch bestimmt, dass Ergebnisse des Wartungsalgorithmus vorrangig vor Ergebnissen des Large Language Models behandelt werden, sobald das maschinelle Lernen abgeschlossen wurde.

Es wurde bereits erwähnt, dass ein Wartungsalgorithmus, der erfolgreich angelernt wurde, geringere Fehlerquoten bei der Auswahl von Wartungsmaßnahmen aufweist als ein auf das LLM basierte Ansatz. Solange dies der Fall ist, werden dessen Ergebnisse vorrangig behandelt. Dies gilt insbesondere dann, wenn die durch das mit dem LLM verbundene Vorgehen abweichende Ergebnisse erzielt. Wie bereits beschrieben kann sich das Verhältnis allerdings im Laufe der Zeit ändern, sodass ein neues Anlernen des Wartungsalgorithmus erforderlich wird.

Gemäß einer Variante sind die oben erklärten Aspekte der Erfindung dadurch bestimmt, dass das Large Language Model einen die Wartungsmaßnahmen enthaltenden Wartungsplan in menschlicher Sprache erstellt.

Die Erstellung eines Wartungsplans in menschlicher Sprache ermöglicht es, auf das LLM basierte Vorgehen der künstlichen Intelligenz durch Personal des Bahnbetriebs übersichtlicher zu überprüfen. Dies ist insbesondere dann von Vorteil, wenn das erfindungsgemäße Verfahren nach seiner Einführung zunächst potenziell viele Fehler erzeugt. Der Performancegewinn wird sich dann erst nach einer Weile einstellen, sodass zumindest am Anfang eine engmaschige Kontrolle durch das die bahntechnische Anlage betreuende Personal erforderlich ist.

Ein Vorteil dieser Variante besteht darin, dass auf durch die Anwendung des Verfahrens auftretende Fehler schnell reagiert werden kann, sodass keine Folgefehler entstehen.

Gemäß einer Variante sind die oben erklärten Aspekte der Erfindung dadurch bestimmt, dass das Large Language Model mehrere alternative Wartungspläne mit unterschiedlichen Randbedingungen erstellt.

Ein Vorteil dieser Variante besteht darin, dass auf eine Änderung der Randbedingungen im Bahnbetrieb schnell reagiert werden kann, indem ein anderer Wartungsplan ausgewählt wird. Dadurch ist es nicht erforderlich, bei jeder Änderung der Rahmenbedingungen das Verfahren zur Planung der Wartungsmaßnahmen erneut anzulernen. Dies ist insbesondere dann von Vorteil, wenn es mehrere standardmäßig durchgeführte Betriebsmodi der bahntechnischen Anlage gibt, bei denen sich jeweils die Randbedingungen in vorhersagbarer Weise ändern.

### Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben. Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.
Figur 1 zeigt ein Ausführungsbeispiel der erfindungsgemäßen Vorrichtung eines bahntechnischen Systems mit ihren Wirkzusammenhängen zwischen den zum Einsatz kommenden Funktionskomponenten schematisch.
Figur 2 zeigt ein Ausführungsbeispiel einer Rechenumgebung für die Vorrichtung gemäß Figur 1 als Blockschaltbild der einzelnen Funktionskomponenten und der zwischen diesen ausgebildeten Schnittstellen, wobei einzelne Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können.
Figur 3 zeigt ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

### Detaillierte Beschreibung der Ausführungsbeispiele

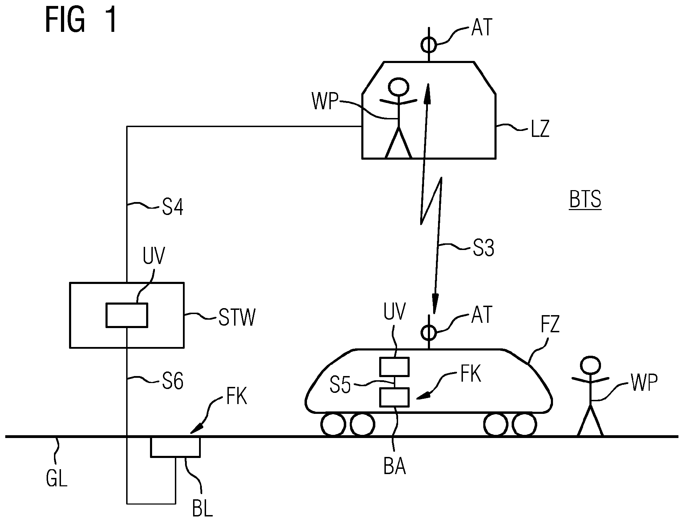

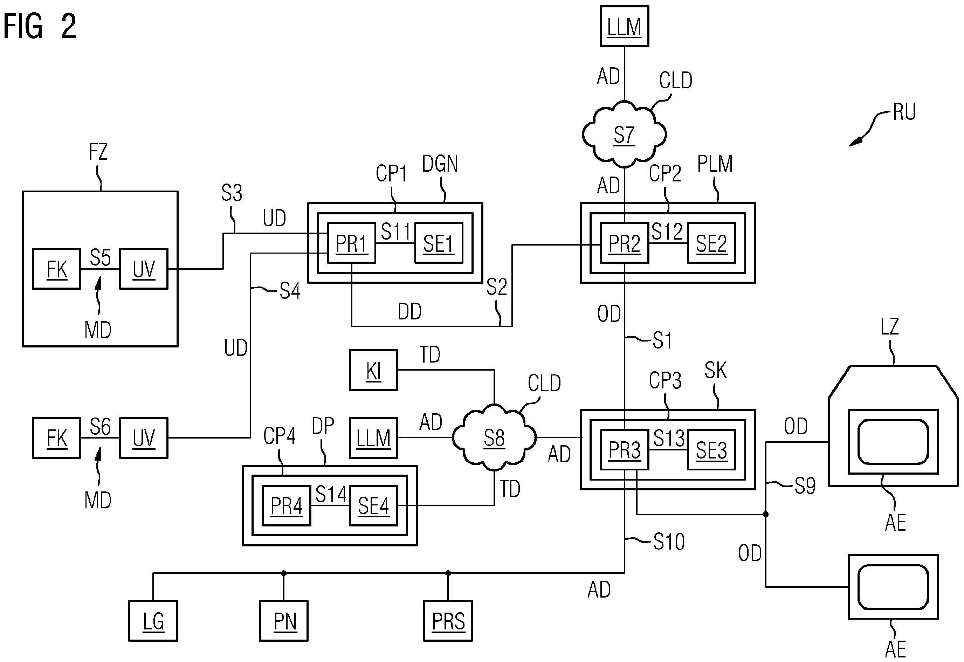

Eine Rechenumgebung RU, in der das erfindungsgemäße Verfahren abläuft kann einer gemeinsamen Betrachtung von Figur 1 und Figur 2 entnommen werden. In Figur 1 ist ein bahntechnisches System BTS dargestellt, für das lediglich exemplarisch eine Streckenkomponente in Form einer Balise BL und eine Fahrzeugkomponente in Form einer Balisenantenne BA dargestellt sind. Während die Balise BL in einem Gleis GL verbaut ist, befindet sich die Balisenantenne BA in einem Fahrzeug FZ, wobei sowohl die Balisenantenne BA als auch die Balise BL je eine Funktionskomponente FK darstellen, die in dem bahntechnischen System BTS zu überwachen sind.

Die bahntechnische Anlage soll hinsichtlich eines Wartungsbedarfes überwacht und analysiert werden. Zu diesem Zweck ist ein in Figur 1 nicht näher dargestelltes Verfahren zur Planung von Wartungsmaßnahmen implementiert, an dem auch Wartungspersonal WP beteiligt ist, welches sich in der Leitzentrale LZ oder am Gleis GL aufhalten kann. Hierzu weist die bahntechnische Anlage außerdem die in Figur 1 nicht näher dargestellte Rechenumgebung RU auf, die anhand von Figur 2 näher erläutert werden wird. Diese besteht aus nicht näher dargestellten Recheninstanzen, welche gemäß Figur 1 in einem Stellwerk STW, einer Leitzentrale LZ und dem Fahrzeug FZ angeordnet sein können und über eine dritte Schnittstelle S3 und eine vierte Schnittstelle S4 mit Überwachungsvorrichtungen UV korrespondieren, die über eine fünfte Schnittstelle S5 und eine sechste Schnittstelle S6 die Funktionskomponenten FK überwachen. Bei der dritten Schnittstelle S3 handelt es sich beispielhaft um eine Funkschnittstelle, wobei auf dem Fahrzeug FZ und der Leitzentrale LZ Antennen AT zur Übertragung angedeutet sind. Selbstverständlich können auch die anderen der dargestellten Schnittstellen als Funkschnittstellen ausgeführt sein, wenn auch nicht dargestellt.

Gemäß Figur 2 sind die jeweils Recheninstanzen bildenden Computer näher dargestellt. Bei einem ersten Computer CP1 einer Diagnoseeinrichtung DGN ist ein erster Prozessor PR1 mit einer ersten Speichereinheit SE1 durch eine elfte Schnittstelle S11 verbunden. Bei einem zweiten Computer CP2 eines Planungsmoduls PLM ist ein zweiter Prozessor PR2 mit einer zweiten Speichereinheit SE2 durch eine zwölfte Schnittstelle S12 verbunden. Bei einem dritten Computer CP3 einer Schnittstellenkomponente SK ist ein dritter Prozessor PR3 mit einer dritten Speichereinheit SE3 durch eine 13. Schnittstelle S13 verbunden. Bei einem vierten Computer CP4 eines Datenpools DP ist ein vierter Prozessor PR4 mit einer vierten Speichereinheit SE4 durch eine 14. Schnittstelle S14 verbunden. Ist im Rahmen dieser Erfindungsbeschreibung nur von Computern, Prozessoren, Speichereinheiten oder Schnittstellen die Rede, beziehen sich die Angaben allgemein auf alle der vorstehend im Einzelnen benannten Computer, Prozessoren, Speichereinheiten und weiteren Funktionskomponenten FK, die verbunden durch die Schnittstellen zur Bildung der Rechenumgebung RU beitragen.

Die zum Einsatz kommenden Recheninstanzen und Funktionskomponenten FK interagieren durch weitere Schnittstellen untereinander. Durch eine erste Schnittstelle S1 sind der zweite Prozessor PR2 und der dritte Prozessor PR3 miteinander verbunden. Durch eine zweite Schnittstelle S2 sind der erste Prozessor PR1 und der zweite Prozessor PR2 miteinander verbunden. Durch eine siebente Schnittstelle S7 die Als Cloud CLD ausgeführt ist, sind der zweite Prozessor PR2 und ein implementiertes Large Language Model LLM miteinander verbunden. Durch eine achte Schnittstelle S8, ebenfalls eine Cloud CLD, sind der dritte Prozessor PR3, eine implementierte künstliche Intelligenz Kl, das implementierte Large Language Model und ein Datenpool DP miteinander verbunden. Durch eine neunte Schnittstelle S9 sind der dritte Prozessor PR3 und Ausgabeeinheiten AE für das Wartungspersonal WP miteinander verbunden. Durch eine zehnte Schnittstelle S10 sind der dritte Prozessor PR3 und ein rechnergestütztes Lager LG für Ersatzteile und anders Wartungsmaterial, ein rechnergestütztes Projektierungssystem PRJ für bahntechnische Systeme und eine rechnergestütztes Verwaltungssystem für Personal PN miteinander verbunden, deren genaue Struktur der zum Einsatz kommenden Recheninstanzen nicht näher dargestellt ist. Ebenso wenig ist die Struktur des Large Language Models LLM und der künstlichen Intelligenz KI näher dargestellt. Mögliche Implementierungen sind an sich bekannt und müssen an dieser Stelle nicht näher beschrieben werden.

Beispielhaft ist auch die Art der Daten dargestellt, die über die einzelnen Schnittstellen ausgetauscht werden. Dies schließt nicht aus, dass auch andere Daten über die bezeichneten Schnittstellen ausgetauscht werden können. Bei den Daten, die in Figur 2 angegeben sind, handelt es sich um Messdaten MD, Überwachungsdaten UD, Diagnosedaten DD, Analysedaten AD, Ausgabedaten OD und Trainingsdatensätze TD.

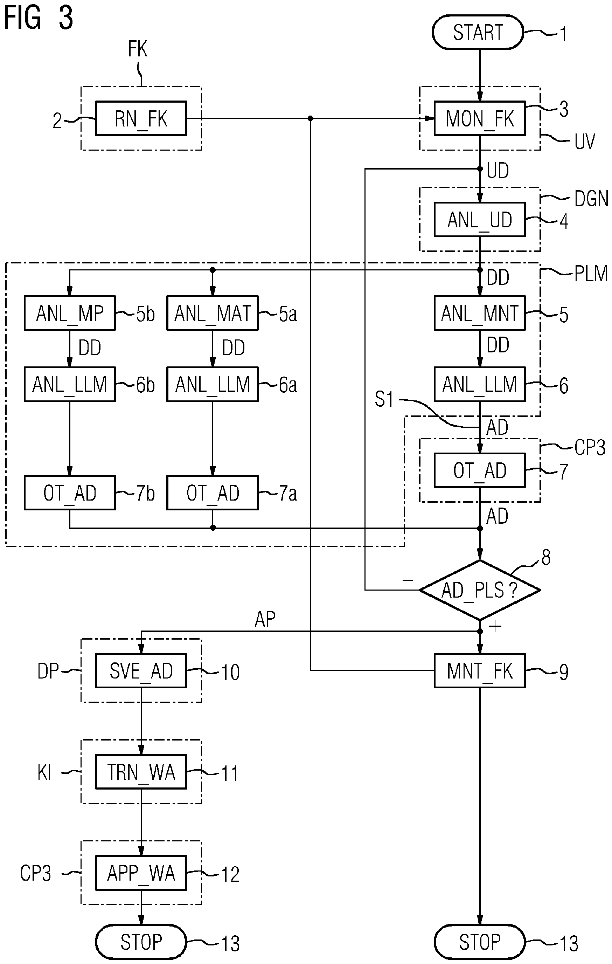

Im Folgenden soll das erfindungsgemäße Verfahren beispielhaft, wie im Flussdiagramm gemäß Figur 3 dargestellt, schrittweise erläutert werden. In Figur 3 ist außerdem beispielhaft durch Kästen angedeutet, in welchen Funktionskomponenten FK und Recheninstanzen gemäß Figur 1 und 2 die einzelnen Schritte durchgeführt werden können. Rechnergestützte Schritte erfolgen in den nicht näher dargestellten Prozessoren. Das Auslesen und Speichern von Daten in die Speichereinheiten sind beispielhaft dargestellt. Soweit hierbei die Schnittstellen gemäß Figur 1 und 2 genutzt werden, sind diese auch in Figur 3 gekennzeichnet.

In einem ersten Schritt 1 erfolgt der Start des Verfahrens (kurz: START).

In einem zweiten Schritt 2 erfolgt der Betrieb einer Funktionskomponente FK des Bahntechnischen Systems BTS (kurz: RN_FK).

In einem dritten Schritt 3 erfolgt eine Überwachung der Funktion der genannten Funktionskomponente FK (kurz: MON_FK), beispielsweise mittels eines Sensors als Überwachungsvorrichtung UV, wobei die Überwachungsvorrichtung UV Überwachungsdaten UD erzeugt.

In einem vierten Schritt 4 erfolgt eine Analyse der Überwachungsdaten UD durch eine Diagnoseeinrichtung DGN (kurz: ANL_UD), wobei das Analyseergebnis in Form von Diagnosedaten DD weiterverarbeitet werden soll. Die Diagnosedaten DD beschreiben einen Bedarf für Wartungsmaßnahmen bezüglich der überwachten Funktionskomponenten FK. Hierbei handelt es sich noch nicht um die zu erledigenden Wartungsmaßnahmen, sondern nur um eine Definition des Bedarfs.

In einem fünften Schritt 5 erfolgt eine Planung erforderlicher Wartungsmaßnahmen (kurz: ANL_MNT), wobei ein Planungsmodul PLM zum Einsatz kommt. Zu diesem Zweck werden die Diagnosedaten DD an ein LLM weitergeleitet, welches in einem sechsten Schritt 6 (kurz: ANL_LLM) eine sprachliche Analyse vornimmt. Das Ergebnis sind Analysedaten AD, die die Diagnosedaten DD in einer menschlichen Sprache beschreiben.

Diese Analysedaten AD werden dann über die erste Schnittstelle S1 an eine Ausgabe Einheit weitergegeben, um an das Wartungspersonal WP ausgegeben werden zu können. In einem siebenten Schritt 7 erfolgt diese Ausgabe (kurz: OT_AD).

In einem achten Schritt 8 erfolgt seitens des Wartungspersonals WP ein Plausibilitätsscheck der Ausgabedaten OD (kurz: AD_PLS?). Erscheinen diese plausibel, geht es mit einem neunten Schritt 9 weiter. Ansonsten erfolgt eine Rekursion zum Schritt 4. Damit wird die Analyse mittels des LLM wiederholt, wobei auch zwischenzeitlich geänderte Daten wie zum Beispiel aktuelle Überwachungsdaten UD berücksichtigt werden können (zu weiteren Daten im Folgenden noch mehr).

In einem neunten Schritt 9 erfolgt die Durchführung der Wartungsmaßnahmen durch das Wartungspersonal WP (kurz: MNT_FK). Dies kann je nach Anforderungen in einer Betriebspause oder während des laufenden Betriebs erfolgen. Mit dem oben beschriebenen Verfahren kann anschließend geprüft werden, ob ein weiterer Wartungsbedarf nach Beendigung der Wartungsmaßnahmen besteht. War die Wartungsmaßnahmen erfolgreich, werden die Überwachungsdaten UD, die daraus erstellten Diagnosedaten DD und erstellten Analysedaten AD im nächsten Durchlauf anzeigen, dass kein Wartungsbedarf besteht. Auch für diese Routine kann das LLM Verwendung finden. Dies ist als Rekursion zum Schritt 3 angedeutet.

Optional können entsprechend der Analyse des Wartungsbedarfs in einem Schritt 5a auch eine Analyse der Materialverfügbarkeit bzw. des Materialbedarfs an Wartungsmaterial durchgeführt werden (kurz ANL_MAT). Optional können außerdem entsprechend der Analyse des Wartungsbedarf in einem Schritt 5b auch eine Analyse der Personalverfügbarkeit bzw. des Personalbedarfs für die Wartungsmaßnahmen durchgeführt werden (kurz (ANL_MP). Diese optionalen Schritte werden parallel mit dem Schritt fünf durchgeführt, wobei sich die erzielten Ergebnisse untereinander bedingen. Der Einfachheit halber sind diese optionalen Stränge allerdings parallel zu den Schritten 5, 6 und 7 dargestellt.

Die für den Materialbedarf nachfolgenden Schritte 6a (kurz ANL_LLM) und 7a (kurz OT_AD) sowie für die Personalplanung erfolgenden Schritte 6b (kurz (ANL_LLM) und 7b (kurz OT_AD) laufen genauso wie die Schritte 6 und 7 ab, nur auf einer alternativen Datenbasis für das Material bzw. das Personal) und werden daher an dieser Stelle nicht näher erläutert.

In einem zehnten Schritt 10 erfolgt die Speicherung der Analysedaten AD in einem Datenpool DP (kurz: SVE_AD). Hier stehen diese für eine weitere Verarbeitung zur Verfügung.

In einem elften Schritt 11 erfolgt das Training eines Wartungsalgorithmus mithilfe einer KI (kurz: TRN_WA). Hier können die Parameter des Wartungsalgorithmus derart trainiert werden, dass diese auch ohne Analyse durch ein LLM zuverlässig Wartungsmaßnahmen aus den Überwachungsdaten UD oder den Diagnosedaten DD ableiten können. Zu diesem Zweck muss ein genügend großer Pool an Trainingsdatensätzen TD im Datenpool DP verfügbar sein, damit ein Training und eine Validierung des gefundenen Wartungsalgorithmus erfolgen können. Dabei wird die Datenbasis durch das laufende Verfahren der Bestimmung eines Wartungsbedarfes unter Zuhilfenahme des LLM ständig erweitert.

Erfolgt In einem zwölften Schritt 12 die Anwendung des Wartungsalgorithmus (kurz: APP_WA). Dieser kann in nicht näher dargestellter Weise redundant zum Ermitteln des Wartungsbedarfs mithilfe des LLM erfolgen. Alternativ kann der Wartungsalgorithmus auch ohne Zuhilfenahme des LLM und der damit verbundenen Analyse zum Einsatz kommen. Dies ist in Figur 3 nicht näher dargestellt. Aber auch bei Abarbeitung des Wartungsalgorithmus wird das maschinelle Lernen und die Analyse durch das LLM iterativ fortgesetzt. Dies hat den Vorteil, dass auf Änderungen des Systems reagiert werden kann. Gegebenenfalls wird auch der Wartungsalgorithmus modifiziert und neu angelernt.

In einem 13. Schritt 13 erfolgt ein Beenden des Verfahrens (kurz: STOP).

### Bezugszeichenliste

- AD: Analysedaten
- AE: Ausgabeeinrichtung
- AT: Antenne
- BA: Balisenantenne
- BL: Balise
- BTS: bahntechnisches System
- CLD: Cloud
- CP1: erster Computer
- CP2: zweiter Computer
- CP3: dritter Computer
- CP4: vierter Computer
- DD: Diagnosedaten
- DGN: Diagnoseeinrichtung
- DP: Datenpool
- FK: Funktionskomponente
- FZ: Fahrzeug
- GL: Gleis
- KI: künstliche Intelligenz
- LLM: Large Language Model
- LZ: Leitzentrale
- MD: Messdaten
- OD: Ausgabedaten
- PLM: Planungsmodul
- PR1: erster Prozessor
- PR2: zweiter Prozessor
- PR3: dritter Prozessor
- PR4: vierter Prozessor
- RU: Rechenumgebung
- S1: erste Schnittstelle
- S10: zehnte Schnittstelle
- S11: elfte Schnittstelle
- S12: zwölfte Schnittstelle
- S13: 13. Schnittstelle
- S14: 14. Schnittstelle
- S2: zweite Schnittstelle
- S3: dritte Schnittstelle
- S4: vierte Schnittstelle
- S5: fünfte Schnittstelle
- S6: sechste Schnittstelle
- S7: siebente Schnittstelle
- S8: achte Schnittstelle
- S9: neunte Schnittstelle
- SE1: erste Speichereinheit
- SE2: zweite Speichereinheit
- SE3: dritte Speichereinheit
- SE4: vierte Speichereinheit
- SK: Schnittstellenkomponente
- STW: Stellwerk
- TD: Trainingsdatensätze
- UD: Überwachungsdaten
- UV: Überwachungsvorrichtung
- WP: Wartungspersonal

## Patentansprüche

1. Verfahren zur Planung von Wartungsmaßnahmen für ein bahntechnisches System (BTS), aufweisend
a)
eine Funktionskomponente (FK), die eine zum Bahnbetrieb gehörende Funktion ausführt,
b)
eine Überwachungsvorrichtung (UV), die die Funktion der Funktionskomponente (FK) überwacht und diese Funktion beschreibende Überwachungsdaten (UD) erzeugt,
c)
eine Diagnoseeinrichtung (DGN), welche von der Überwachungsvorrichtung (UV) erstellte, die Überwachungsdaten (UD) enthaltende Nachrichten empfängt und rechnergestützt Diagnosedaten (DD), die einen Bedarf für Wartungsmaßnahmen beschreiben, erzeugt,
**dadurch gekennzeichnet, dass**
ein rechnergestütztes Planungsmodul (PLM) zum Einsatz kommt, welches ein Large Language Model (LLM) verwendet, um
d)
die Diagnosedaten (DD) enthaltende Nachrichten auszuwerten und Analysedaten (AD), die die Diagnosedaten (DD) in einer menschlichen Sprache beschreiben, zu erzeugen,
e)
die Analysedaten (AD) auszuwerten, wobei das Auswerten in Bezug auf einen Wartungsbedarf und/oder Wartungsmaßnahmen erfolgt,
f)
eine Beschreibung des Wartungsbedarfs und/oder Wartungsmaßnahmen in menschlicher Sprache zu erzeugen,
g)
die Beschreibung des Wartungsbedarfs und/oder der Wartungsmaßnahmen repräsentierende Ausgabedaten (OD) über eine erste Schnittstelle (S1) auszugeben.

2. Verfahren nach Anspruch 1, **dadurch gekennzeichnet, dass** das rechnergestützte Planungsmodul (PLM) auch zum Einsatz kommt, um
h)
eine Verfügbarkeit von Wartungsmaterial in einer menschlichen Sprache beschreibende Analysedaten (AD) auszuwerten, wobei das Auswerten in Bezug auf eine Materialverfügbarkeit und/oder Beschaffungsmaßnahmen für das Wartungsmaterial erfolgt,
i)
eine Beschreibung der Materialverfügbarkeit und/oder Beschaffungsmaßnahmen in menschlicher Sprache zu erzeugen,
j)
die Beschreibung der Materialverfügbarkeit und/oder Beschaffungsmaßnahmen repräsentierende Ausgabedaten (OD) über die erste Schnittstelle (S1) auszugeben.

3. Verfahren nach Anspruch 1 oder 2, **dadurch gekennzeichnet, dass** das rechnergestütztes Planungsmodul (PLM) auch zum Einsatz kommt, um
k)
eine Verfügbarkeit von Wartungspersonal (WP) in einer menschlichen Sprache beschreibende Analysedaten (AD) auszuwerten, wobei das Auswerten in Bezug auf eine Personalverfügbarkeit und/oder Personalplanung erfolgt,
l)
eine Beschreibung der Personalverfügbarkeit und/oder Personalplanung in menschlicher Sprache zu erzeugen,
m)
die Beschreibung der Personalverfügbarkeit und/oder Personalplanung repräsentierende Ausgabedaten (OD) über die erste Schnittstelle (S1) auszugeben.

4. Verfahren nach einem der vorhergehenden Ansprüche, **dadurch gekennzeichnet, dass** die Analysedaten (AD) in einem Datenpool (DP) gesammelt gespeichert werden.

5. Verfahren nach einem der vorhergehenden Ansprüche, **dadurch gekennzeichnet, dass** eine Eingabeaufforderung ausgegeben wird, dass ein Mensch die Plausibilität und/oder Richtigkeit der Analysedaten (AD) bestätigen soll und eine darauf gerichtete Eingabe ausgewertet wird.

6. Verfahren nach einem auf Anspruch 4 bezogenen Anspruch 5, **dadurch gekennzeichnet, dass** die Eingabe den zugehörigen Analysedaten (AD) zugeordnet wird und zusammen mit den zugehörigen Analysedaten (AD) als Trainingsdatensätze (TD) in dem Datenpool (DP) abgespeichert wird.

7. Verfahren nach Anspruch 6, **dadurch gekennzeichnet, dass** mit den Trainingsdatensätzen (TD) ein maschinelles Lernen für einen auf künstliche Intelligenz (KI) basierenden Wartungsalgorithmus durchgeführt wird.

8. Verfahren nach Anspruch 7, **dadurch gekennzeichnet, dass** die Schritte d) und g) gemäß Anspruch 1, insbesondere auch Schritt j) gemäß Anspruch 2 und/oder Schritt m) gemäß Anspruch 3 parallel zum Large Language Model (LLM) auch mit dem Wartungsalgorithmus durchgeführt werden.

9. Verfahren nach Anspruch 8, **dadurch gekennzeichnet, dass** Ergebnisse des Wartungsalgorithmus vorrangig vor Ergebnissen des Large Language Models (LLM) behandelt werden, sobald das maschinelle Lernen abgeschlossen wurde.

10. Verfahren nach einem der vorhergehenden Ansprüche, **dadurch gekennzeichnet, dass** das Large Language Model (LLM) einen die Wartungsmaßnahmen enthaltenden Wartungsplan in menschlicher Sprache erstellt.

11. Verfahren nach Anspruch 10, **dadurch gekennzeichnet, dass** das Large Language Model (LLM) mehrere alternative Wartungspläne mit unterschiedlichen Randbedingungen erstellt.

12. Bahntechnisches System mit einem rechnergestützten Werkzeug zur Wartungsplanung, aufweisend
n)
eine Funktionskomponente (FK), die eingerichtet ist, eine zum Bahnbetrieb gehörende Funktion auszuführen,
o)
eine Überwachungsvorrichtung (UV), die eingerichtet ist, die Funktion der Funktionskomponente (FK) zu überwachen und diese Funktion beschreibende Überwachungsdaten (UD) zu erzeugen,
p)
eine Diagnoseeinrichtung (DGN), welche eingerichtet ist, von der Überwachungsvorrichtung (UV) erstellte, die Überwachungsdaten (UD) enthaltende Nachrichten zu empfangen und rechnergestützt einen Bedarf für Wartungsmaßnahmen beschreibende Diagnosedaten (DD) zu erzeugen, **dadurch gekennzeichnet, dass**
das Werkzeug zur Wartungsplanung ein Planungsmodul (PLM) enthält, welches eingerichtet ist, unter Einsatz eines Large Language Models (LLM) die Schritte d) bis g) gemäß Anspruch 1 durchzuführen.

13. Computerprogrammprodukt, enthaltend Programmbefehle, die durch eine Rechenumgebung (RU) ausführbar sind, derart, dass zumindest die Schritte d) bis g) des Verfahrens nach einem der Ansprüche 1 - 11 ausgeführt wird.

14. Computerlesbares Speichermedium, enthaltend Daten, welche als Datensätze vom Speichermedium gespeichert werden, derart, dass die Datensätze das Computerprogrammprodukt nach dem letzten voranstehenden Anspruch ausführbar machen.
